# EUROPEAN PATENT SPECIFICATION

(11) **EP 4 269 048 B1**
(45) Date of publication and mention of the grant of the patent: **10.09.2025**
(21) Application number: 23168176.8
(22) Date of filing: 17.04.2023
(51) Int. Cl.: B25J 13/08, B25J 9/00, B25J 9/04

(54) **RECOVERY DEVICE AND USE OF THIS DEVICE**
RÜCKGEWINNUNGSVORRICHTUNG UND VERWENDUNG DIESER VORRICHTUNG
DISPOSITIF DE RÉCUPÉRATION ET UTILISATION DE CE DISPOSITIF

(30) Priority: 22.04.2022 JP 2022070796
(43) Date of publication of application: 01.11.2023
(73) Proprietor: Suntory Holdings Limited, Osaka 530-8203 (JP)
(72) Inventor: MATSUOKA, Akihiro, Kumamoto (JP); TAKENOSHITA, Kazuyoshi, Kumamoto (JP); SHIGAKI, Kenshiro, Kumamoto (JP); FUJITA, Daiki, Kumamoto (JP); NAKAYAMA, Takeshi, Kumamoto (JP); ETOU, Kiyoshi, Kumamoto (JP)
(74) Representative: Vossius & Partner Patentanwälte Rechtsanwälte mbB

(56) References cited:
- WO-A1-2020/013687
- WO-A2-2009/146117
- CN-A- 110 605 702
- CN-A- 114 012 757
- US-B1- 9 827 677

## Description

### Technical Field

The present invention relates to a recovery device.

### Background Art

Producing an industrial product may involve continuously supplying a material of the product with use of a mechanical supplier apparatus such as a conveyor belt. An example of such a material is a preform supplied as a material of a plastic bottle during the process of producing a plastic bottle beverage product.

Japanese Patent No. 622910 (Patent Literature 1), for example, discloses as such a supplier apparatus a preform supplier device configured to remove any preform in an orientation other than a basic orientation and recover such removed preforms. Japanese Unexamined Patent Application Publication, Tokukai, No. 2015-112840 (Patent Literature 2) also discloses a preform aligner and conveyor device configured to remove any preform being conveyed in an improper orientation and recover such removed preforms.

### Citation List

### Patent Literature

Patent Literature 1
   Japanese Patent No. 622910
Patent Literature 2
   Japanese Unexamined Patent Application Publication, Tokukai, No. 2015-112840

CN 110 605 702 A discloses a feeding robot which comprises a stand column and a joint mechanism, wherein the joint mechanism comprises a first mechanical arm, a second mechanical arm and a turnover bucket, the first end of the first mechanical arm is rotationally connected with the side wall of the stand column, the second end of the first mechanical arm is rotationally connected with the first end of the second mechanical arm, and the turnover bucket is rotationally connected with the second end of the second mechanical arm. The joint mechanism is arranged and is used for conveying and transferring materials.

CN 114 012 757 A discloses a movable automatic fruit picking device based on machine vision and a method thereof. The device comprises: a chassis mechanism, which is mechanism mainly used for supporting and moving the picking device, wherein the upper end of the chassis mechanism is provided with a storage mechanism, and the storage mechanism is mainly used for a collecting structure; an arm mechanism, which is mounted at the upper end of the chassis mechanism and is arranged on the right side of the storage mechanism; and a control structure box, which is installed at the top end of the chassis mechanism and arranged on the rear side of the arm mechanism. The automatic picking device can better adapt to walking actions on the soil ground, so walking is more convenient; and the device can pick up fruit while temporarily storing the picked fruit, so continuous work is facilitated.

WO 2020/013687 A1 discloses a packing method of packing articles into a packing box comprises pre-grouping articles on a pre grouping surface provided by a pre grouping conveyor belt of a pre grouping conveyor, and providing the articles from the pre-grouping surface of the pre-grouping conveyor belt into the packing box.

US 9 827 677 B1 discloses a robot device which comprises a base linkage, having a first end and a second end, that may be connected to a support base at the first end. The support base may be a mobile base. A first end effector and a first end of a control arm may be connected to the second end of the base linkage. A second end effector may be attached to a second end of the control arm. The control arm may be an actuated control arm configured to move the first end effector to engage or operate in coordination with the first end effector. The first end effector may be a shovel tool and the second end effector may be a sweeping tool configured to engage with the shovel tool.

WO 2009/146117 A2 discloses a collector connected to a positioner, such as a robot arm. The positioner can automatically move the collector in multiple dimensions to collect objects into the collector according to a specified collection pattern. By moving the collector in multiple dimensions, the positioner provides for objects to be arranged in the collector according to a specified pattern.

### Summary of Invention

### Technical Problem

Supplier apparatuses of the above types may be stopped temporarily, for instance, for a switch of products, for an inspection or maintenance, or as a result of the supplier apparatus being out of the material. Such a stop leaves on the supplier apparatus some material that typically does not have an impaired quality and that is still usable when the production resumes. However, it can have been difficult, depending on the scale or arrangement of the supplier apparatus, to recover such material while keeping its quality.

The devices disclosed in Patent Literature 1 and Patent Literature 2 are each designed to remove preforms on the basis of their orientation during conveyance and recover them in a reusable manner. The devices, however, assume that most preforms are conveyed in a normal orientation, and are merely intended to recover and reuse preforms removed exceptionally. The devices are, in other words, merely designed to recover and reuse only a small fraction of the preforms that the devices target. The devices have thus left room for improvement in terms of recovering, in a reusable manner, a large number of pieces of the material remaining on a supplier apparatus as a result of the production being stopped temporarily.

The above circumstances have led to a demand for a recovery device and a material supplier system each configured to recover a material in a reusable manner after a temporary stop of production.

### Solution to Problem

The present invention is defined by the appended independent claim, and preferred aspects of the present invention are defined by the appended dependent claims. A recovery device is a recovery device (1) configured to receive a recovery target (P) at a predetermined receiving position and discharge the recovery target (P) into a predetermined recovery container (C), the recovery device (1) including: a robot (2); a bucket (3) attached to the robot (2) and having an opening (31); and a controller (4) configured to control the robot (2), the bucket (3) being switchable in response to an operation of the robot (2) between a receiving orientation, in which the bucket (3) is able to receive the recovery target (P) through the opening (31), and a discharging orientation, in which the bucket (3) is able to discharge the recovery target (P) through the opening (31), the controller (4) being configured to perform a receiving function for controlling the robot (2) to switch the bucket (3) into the receiving orientation and move the bucket (3) to the receiving position to cause the bucket (3) to receive the recovery target (P), and a discharging function for controlling the robot (2) to move the bucket (3) containing the recovery target (P) to a position over a bottom surface of the recovery container (C) at a predetermined height and switch the bucket (3) into the discharging orientation to cause the bucket (3) to discharge the recovery target (P) at the predetermined height.

{A recovery device according to the present invention is configured such that the bucket (3) is provided with a distance-measuring sensor (35) configured to measure a distance between the distance-measuring sensor (35) and a surface facing the distance-measuring sensor (35), the controller (4) is further configured to perform a measuring function for controlling the robot (2) to move the distance-measuring sensor (35) over the recovery container (C) to measure the distance, and the controller (4) is configured to select the predetermined height, at which the controller (4) causes the bucket (3) to discharge the recovery target (P) for the discharging function, based on the distance that the distance-measuring sensor (35) has measured for the measuring function.

The above configuration involves determining the state of the discharge destination in a timely manner and controlling the bucket for its discharge height depending on the state. This more reliably prevents the recovery target from falling by a large distance. } [insert this passage into page

A material supplier system is a material supplier system (100) configured to supply a material (P) to a predetermined production apparatus, the material supplier system (100) including: a conveyor device (110) configured to convey the material (P); a transfer device (120) configured to transfer the material (P) in a container (C) to the conveyor device (110); and a recovery device (1) configured to recover the material (P) on the conveyor device (110) and discharge the material (P) into a container (C), the conveyor device (110) including: a primary segment (111) extending from the transfer device (120) to the production apparatus; and a secondary segment (113) branching from the primary segment (111) at a branch point (112) and extending to the recovery device (1), the conveyor device (110) having a supply mode, in which the primary segment (111) rotates in a forward direction, and a recovery mode, in which a portion of the primary segment (111) rotates in a reverse direction and in which the secondary segment (113) rotates, the recovery device (1) including: a robot (2); a bucket (3) attached to the robot (2) and having an opening (31); and a controller (4) configured to control the robot (2), the bucket (3) being switchable in response to an operation of the robot (2) between a receiving orientation, in which the bucket (3) is able to receive the material (P) from the conveyor device (110), and a discharging orientation, in which the bucket (3) is able to discharge the material (P) through the opening (31), the controller (4) being configured to perform a receiving function for controlling the robot (2) to switch the bucket (3) into the receiving orientation and cause the bucket (3) to receive the material (P) from the conveyor device (110), and a discharging function for controlling the robot (2) to move the bucket (3) containing the material (P) to a position over a bottom surface of a container (C) at a predetermined height and switch the bucket (3) into the discharging orientation to cause the bucket (3) to discharge the material (P) at the predetermined height.

The above configurations each allow the bucket to receive a recovery target (material) in a large mass, and allows efficient recovery even when recovering a recovery target in a relatively large amount. Further, the above configurations each control the bucket for its height and cause the bucket to discharge the recovery target at a predetermined height. This prevents the recovery target from falling by a large distance, and thereby allows the recovery device to recover the recovery target in such a manner that the recovery target is not easily damaged. This in turn allows the recovery target to be reused reliably.

The description below deals with preferable embodiments of the present invention. The preferable embodiments described below as examples do not limit the scope of the present invention.

A recovery device as a preferable embodiment of the present invention is configured such that the bucket (3) is provided with a loading sensor (34) configured to detect that a mass of the recovery target (P) in the bucket (3) is over a predetermined threshold.

The above configuration reliably prevents the bucket from being loaded excessively, and thereby reliably prevents the recovery target from unintentionally falling out of the bucket. This reliably allows a higher recovery rate.

A recovery device as a preferable embodiment of the present invention is configured such that the recovery container (C) has a plurality of horizontally arranged areas (A1, A2, A3, A4), the discharging function involves the bucket (3) discharging the recovery target (P) onto a target area as one of the areas (A1, A2, A3, A4), and the controller (4) is configured to select one of the areas (A1, A2, A3, A4) in a predetermined sequence as the target area for each instance of performing the discharging function.

The above configuration allows the recovery target to be loaded in the recovery container roughly uniformly in the horizontal direction. This reliably allows effective use of the capacity of the recovery container.

A recovery device as a preferable embodiment of the present invention is configured such that the recovery target (P) is a preform of a plastic bottle.

While preforms involve a particular concern of being damaged by a fall, the above configuration allows the recovery device to recover preforms without impairing the quality thereof.

A recovery device as a preferable embodiment of the present invention is configured such that the robot (2) is a vertically articulated robot.

The above configuration allows the recovery device to finely control how to move the bucket, and thereby more reliably prevents the recovery target from being damaged.

Additional features and advantages of the present invention will be made clearer by the description of the exemplary and non-limiting embodiments below, which are described with reference to the drawings.

### Brief Description of Drawings

Fig. 1 is a diagram illustrating the configuration of a material supplier system.
Fig. 2 is a perspective view of a recovery device as an embodiment.
Fig. 3 is a perspective view of a bucket for an embodiment in a receiving orientation.
Fig. 4 is a side view of a bucket for an embodiment in a discharging orientation.
Fig. 5 is a diagram illustrating how a receiving function is performed for an embodiment.
Fig. 6 is a diagram illustrating how a measuring function is performed for an embodiment.
Fig. 7 is a diagram illustrating how a discharging function is performed for an embodiment.

### Description of Embodiments

The description below deals with a recovery device and a material supplier system with reference to drawings. The example described below relates to (i) a material supplier system 100 configured to supply preforms P (which is an example of the "recovery target" and an example material) to a production apparatus in a factory of plastic bottle beverage products and (ii) a recovery device 1 included in the material supplier system 100.

### Purpose of Preforms and How to Handle Preforms

The material supplier system 100 and the recovery device 1 involve preforms P each as a molded article of polyethylene terephthalate for use as a material of a plastic bottle. The preforms P are each in the shape of a test tube having (i) a mouth with a male thread around which a plastic bottle cap is screwable and (ii) a bottomed tube-shaped body continuous with the mouth.

The apparatus for producing plastic bottle beverage products includes various devices in accordance with the flow of the process of (i) blow-molding each preform P into a plastic bottle, (ii) filling the plastic bottle with beverage liquid, and (iii) sealing the plastic bottle with a cap to produce a plastic bottle beverage product. The material supplier system 100 is disposed the most upstream in this flow and configured to supply and recover preforms P.

As the above process flow indicates, the preforms P are processed finally into plastic bottles to be marketed. Damage to a preform P results in the plastic bottle being damaged, leading to disadvantages such as poor appearance of the plastic bottle beverage product and leakage of the beverage liquid. This necessitates designing all the process steps to prevent any risk factor for damage to preforms P (such as impact). This means that the material supplier system 100 and the recovery device 1 need to be designed as such in order to, for instance, prevent a preform P from falling from a relatively high position while being conveyed.

### Configuration of Material Supplier System

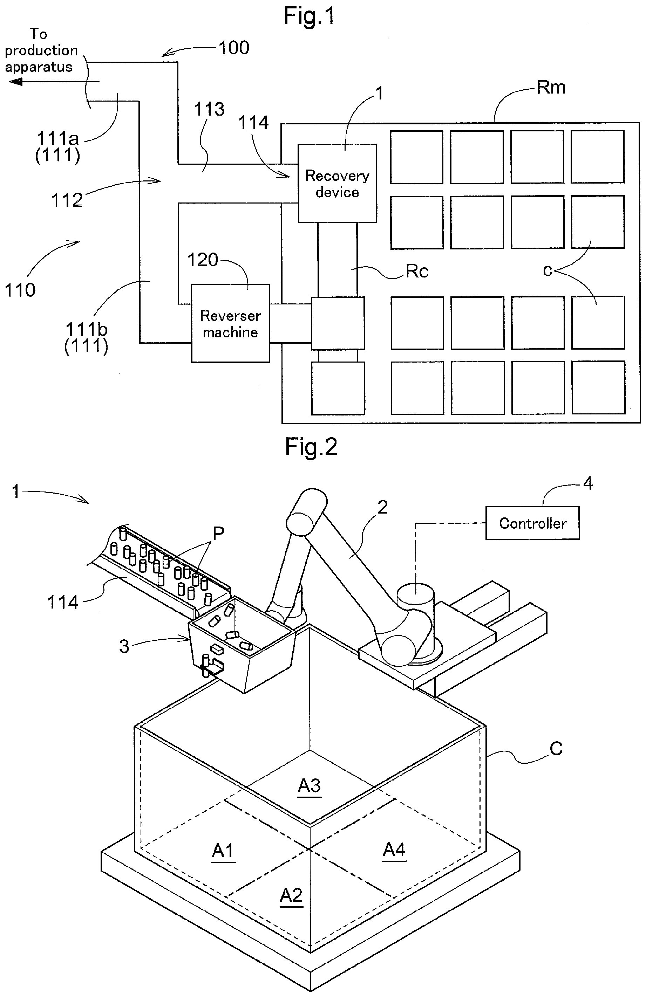

The material supplier system 100 is configured to supply preforms P to an apparatus (not illustrated in the drawings) for producing plastic bottle beverage products. As illustrated in Fig. 1, the material supplier system 100 includes a conveyor 110 (which is an example of the "conveyor device"), a reverser machine 120 (which is an example of the "transfer device"), and a recovery device 1.

The conveyor 110 is a publicly known one configured to convey preforms P. Examples of the conveyor 110 include a conveyor belt. The conveyor 110 includes a primary segment 111 extending from the reverser machine 120 to the production apparatus and a secondary segment 113 branching from the primary segment 111 at a branch point 112 and extending to the recovery device 1. The description below uses the term "first primary subsegment 111a" to refer to that portion of the primary segment 111 which extends from the branch point 112 to the production apparatus the term "second primary subsegment 111b" to refer to that portion of the primary segment 111 which extends from the branch point 112 to the reverser machine 120.

The conveyor 110 is operable in either of a supply mode and a recovery mode. In the supply mode, the conveyor 110 supplies preforms P to the production apparatus, whereas in the recovery mode, the conveyor 110 conveys preforms P to the recovery device 1. Specifically, in the supply mode, the primary segment 111 rotates in the forward direction to convey preforms P from the reverser machine 120 to the production apparatus. In the recovery mode, the first primary subsegment 111a rotates in the reverse direction while the secondary segment 113 rotates to convey preforms P on the conveyor 110 to the recovery device 1. This means that at least the first primary subsegment 111a is configured to rotate in either of (i) the forward direction to convey preforms P from the reverser machine 120 to the production apparatus and (ii) the reverse direction opposite to the forward direction. The second primary subsegment 111b is, in contrast, configured to simply convey preforms P from the reverser machine 120 to the branch point 112 in the supply mode, and is not necessarily configured to rotate in the reverse direction. Similarly, the secondary segment 113 is configured to simply convey preforms P from the branch point 112 to the recovery device 1 in the recovery mode, and is not necessarily configured to rotate in the reverse direction.

The reverser machine 120 is configured to transfer preforms P in a container C onto the conveyor 110 (specifically, the second primary subsegment 111b). Specifically, the reverser machine 120 is configured to lift and tilt a container C to let preforms P fall from the container C through an opening in its upper portion onto the conveyor 110.

The recovery device 1 is disposed at an end 114 of the conveyor 110 (specifically, the secondary segment 113) and configured to recover preforms P on the conveyor 110 and discharge the preforms P into a container C. The recovery device 1 is in a packaging material preparation room Rm, which stores containers C and contains a container conveyor Rc. The container conveyor Rc is configured to supply to the reverser machine 120 a container C containing preforms P and also supply to the recovery device 1 a container C out of which the reverser machine 120 has emptied preforms P. The present embodiment allows the recovery device 1 to use such an empty container C to contain preforms P.

While the production apparatus is in operation, the conveyor 110 operates in the supply mode to continuously supply preforms P to the production apparatus. The reverser machine 120 regularly receives a container C containing preforms P and supplies preforms P onto the conveyor 110 in sequence.

When the production apparatus stops its operation, unused preforms P remain on the conveyor 110. The conveyor 110 then operates in the recovery mode to convey the unused preforms P to the recovery device 1, which in turn operates to transfer the unused preforms P into a container C. When the production apparatus operates the next time, the reverser machine 120 receives the container C containing the unused preforms P and supplies the unused preforms P onto the conveyor 110.

### Configuration of Recovery Device

The recovery device 1 is disposed at an end 114 (which is an example of the "predetermined receiving position") of the conveyor 110 (specifically, the secondary segment 113) and configured to receive preforms P (which is an example of the "recovery target") and discharge the preforms P into a container C (which is an example of the "predetermined recovery container"). As illustrated in Fig. 2, the recovery device 1 includes a vertically articulated robot 2 (which is an example of the "robot"), a bucket 3, and a controller 4.

The vertically articulated robot 2 may be a publicly known one for use in any of various industrial areas, and is not limited in terms of its specifications (such as the number of axes and the output) as long as the vertically articulated robot 2 is capable of moving as described later. The vertically articulated robot 2 should, however, be preferably a so-called cooperative robot because a person may work near the recovery device 1. The vertically articulated robot 2 may be replaced with a robot of another type such as a horizontally articulated robot, a double-arm robot, a cylindrical coordinate robot, a Cartesian coordinate robot, and a polar coordinate robot.

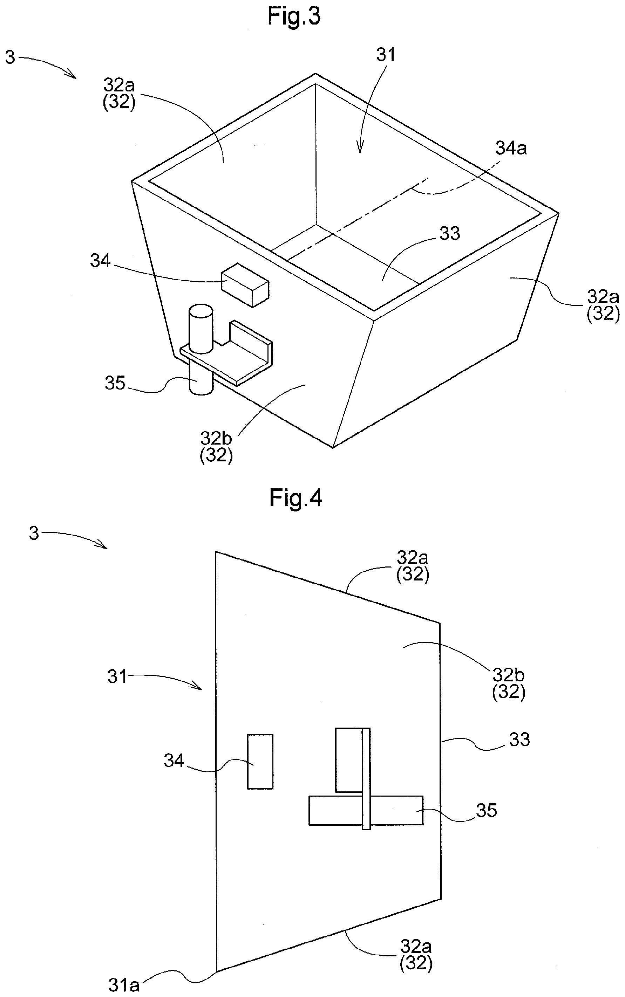

The bucket 3 is attached to the leading end of the vertically articulated robot 2. The bucket 3 has an opening 31 through which preforms P enter and exit the bucket 3. The bucket 3 is switchable between a receiving orientation and a discharging orientation. In the receiving orientation (see Fig. 3), the opening 31 faces vertically upward so that the bucket 3 is able to receive preforms P through the opening 31. In the discharging orientation (see Fig. 4), the opening 31 at least partially faces horizontally so that the bucket 3 is able to discharge preforms P through the opening 31. The bucket 3 is switchable in orientation as such by means of the movement of the vertically articulated robot 2. Fig. 4 illustrates the bucket 3 with its bottom 33 oriented vertically as an example of the discharging orientation. The bucket 3 is, however, simply oriented to discharge preforms P in the discharging orientation; thus, the bottom 33 may be inclined relative to the vertical direction. For instance, the bucket 3 will discharge preforms P if oriented such that one of its four sides 32 (that is, an inclined side 32a) is inclined downward toward the opening 31.

The four sides 32 of the bucket 3 include two sides (that is, inclined sides 32a) inclined relative to the bottom 33 to let preforms P out of the bucket 3 in the discharging orientation. The bucket 3 is thus in the shape of a trapezoid as viewed sideways. The bucket 3 has a depth (that is, the distance between the plane of the opening and the bottom 33) of 200 mm to prevent preforms P to be received by the bucket 3 from falling by such a distance that the preforms P will be easily damaged on impact.

As illustrated in Fig. 3, the bucket 3 is provided with an optoelectronic sensor 34 (which is an example of the "loading sensor") inside itself. The optoelectronic sensor 34 has an optical axis 34a and is configured to transmit a detection signal to the controller 4 in response to the pile of preforms P in the bucket 3 blocking the optical axis 34a. The detection signal indicates that the mass of preforms P in the bucket 3 is over a predetermined threshold.

As illustrated in Fig. 3, the bucket 3 is also provided with a distance-measuring sensor 35 on an outer face of one of the four sides 32 (that is, a standing side 32b). The distance-measuring sensor 35 is configured to measure the distance between itself and a surface facing the distance-measuring sensor 35. The distance-measuring sensor 35 may be, for example, a publicly known laser sensor or ultrasonic sensor. Setting the bucket 3 in the receiving orientation, placing the distance-measuring sensor 35 over the bottom surface of a container C, and operating the distance-measuring sensor 35 allows the distance-measuring sensor 35 to measure the distance between the bucket 3 and the bottom surface. The distance-measuring sensor 35 transmits to the controller 4 an electric signal indicative of the distance that it has measured. Causing the distance-measuring sensor 35 to measure the distance while moving it over the bottom surface of a container C allows the distance-measuring sensor 35 to continuously measure the distance along the scanning path.

The controller 4 is in the form of a publicly known computer, and thus includes components that a computer typically includes, such as (i) a computing device such as a central processing unit (CPU), (ii) a storage device such as a hard disk drive, (iii) an output unit such as a liquid crystal display, (iv) an input unit such as a keyboard and a mouse, and (v) a communication device such as a network card and a wireless LAN module. The controller 4 is electrically connected to the vertically articulated robot 2, and is configured to control how each axis of the vertically articulated robot 2 operates. The controller 4 is also electrically connected to the optoelectronic sensor 34 and the distance-measuring sensor 35, and is configured to receive signals from these sensors. The controller 4 is configured to communicate with another controller (not illustrated in the drawings) configured to control the conveyor 110 and the reverser machine 120. This allows cooperative control of the conveyor 110, the reverser machine 120, and the recovery device 1. The controller 4 includes the below-described control program installed thereon.

### Configuration of Control Program

The control program installed on the controller 4 is configured to, upon execution by the controller 4, cause the controller 4 to perform the receiving function, the measuring function, and the discharging function described below. The three functions are each for controlling how the vertically articulated robot 2 operates to achieve its intended purpose. The description below deals with how the bucket 3 is operated for each function through the operation of the vertically articulated robot 2, but for a simpler description, omits dealing with how the vertically articulated robot 2 operates.

### (1) Receiving function

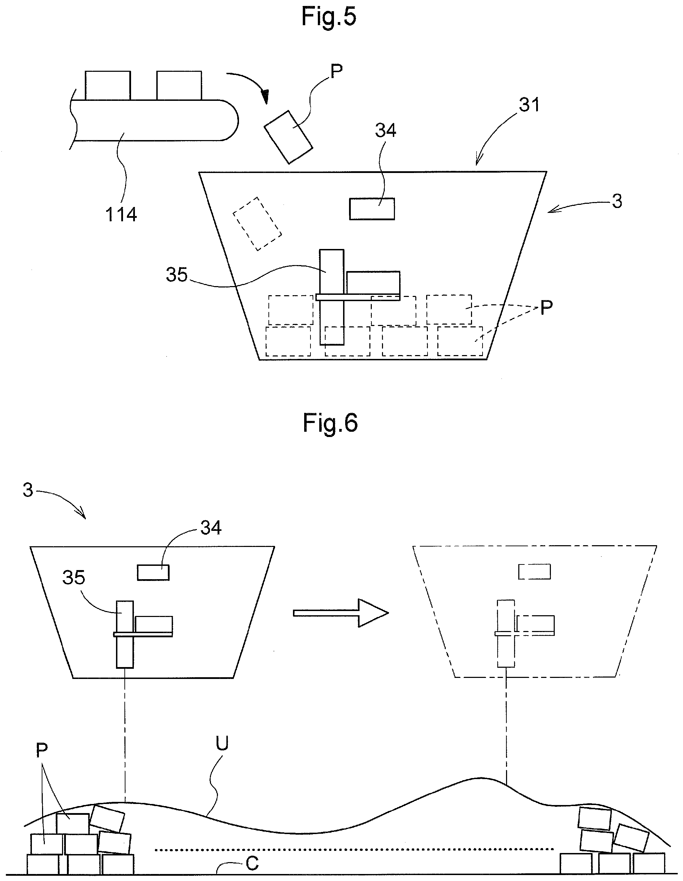

The receiving function is for causing the bucket 3 to receive preforms P. The receiving function involves first switching the bucket 3 into the receiving orientation and then moving the bucket 3 to a position next to the end 114 of the conveyor 110 (specifically, the secondary segment 113) as illustrated in Fig. 5 so that the bucket 3 has its opening 31 next to and below the end 114. Operating the conveyor 110 (specifically, the secondary segment 113) in this state causes preforms P to fall into the bucket 3. This allows the bucket 3 to receive preforms P.

As the bucket 3 continues to receive preforms P, they pile up above the opening 31. In response to the preforms P blocking the optical axis of the optoelectronic sensor 34, the optoelectronic sensor 34 transmits a detection signal to the controller 4. In response to receiving the detection signal, the controller 4 transmits to the controller of the conveyor 110 a signal to request the controller to stop the conveyor 110. This stops the conveyor 110, so that the bucket 3 stops receiving preforms P.

### (2) Measuring function

The measuring function is for determining the state of a discharge destination (that is, a position to which preforms P are to be discharged) before preforms P are discharged. As described above, preforms P should not fall by a distance of more than 200 mm to avoid being damaged on impact. The discharging function described later involves controlling the bucket 3 for its height in such a manner as to meet the above condition. As the bucket 3 repeats discharging preforms P into a container C, preforms P pile up in the container C, which means that the discharge destination has a height that varies each time. The controller 4 thus performs the measuring function before each instance of performing the discharging function to determine the height of the discharge destination as a basis for how to control the bucket 3 for the discharging function.

Specifically, as illustrated in Fig. 6, the measuring function involves continuously operating the distance-measuring sensor 35 while horizontally moving the bucket 3 in the receiving orientation over the discharge destination (that is, a container C) to measure the distance. The measuring function normally follows the receiving function and involves no orientation change. Horizontally moving the distance-measuring sensor 35 in operation over the discharge destination as above produces a measurement curve that reflects the undulation U at the discharge destination, which is attributed to preforms P piled up at the discharge destination.

### (3) Discharging function

The discharging function is for causing the bucket 3 to discharge preforms P into a container C. The discharging function involves first moving the bucket 3 in the receiving orientation to a position over the discharge destination. This places the bucket 3 at such a height (which is an example of the "predetermined height") that the opening 31 of the bucket 3 will, as switched into the discharging orientation later, have a lower edge 31a apart from the discharge destination by a height H of 200 mm. The placement of the bucket 3 is based on the distance between the distance-measuring sensor 35 and the discharge destination as measured by means of the measuring function.

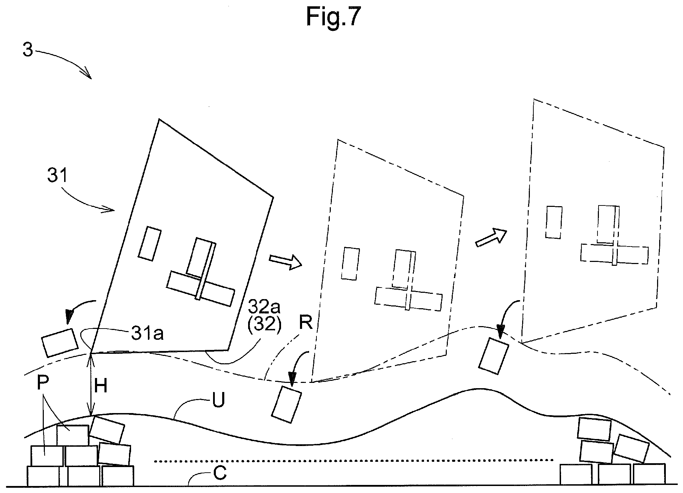

As illustrated in Fig. 7, the bucket 3 is then switched into the discharging orientation, which lets the preforms P roll down an inclined side 32a into a container C. As described above, the height H between the lower edge 31a and the discharge destination is 200 mm. This prevents the preforms P from falling by such a distance that the preforms P will be damaged.

Subsequently, the bucket 3 is, in the discharging orientation, moved along the route along which the distance-measuring sensor 35 was moved while measuring the distance for the measuring function. For the measuring function, the bucket 3 is moved horizontally. For the discharging function, in contrast, the bucket 3 is continuously adjusted in height as illustrated in Fig. 7 such that the lower edge 31a of the opening 31 moves through a route R 200 mm above the undulation U determined by means of the measuring function. This allows the bucket 3 to discharge all its preforms P while the preforms P fall by a distance of approximately 200 mm. Gradually inclining the bucket 3 (specifically, such that the bottom 33 is gradually becoming vertical) while moving the bucket 3 along the route R reliably allows the preforms P to be discharged uniformly across the entire area of the discharge destination.

### (4) Repeating the three functions

The controller 4 performs a plurality of cycles each constituted of a sequence of the receiving function, the measuring function, and the discharging function as described above to let preforms P pile up in a container C. As illustrated in Fig. 2, each container C has four horizontally arranged areas A1 to A4 (which is an example of the "plurality of areas"). The discharging function of each cycle targets one of the areas A1 to A4 (that is, a target area) as its discharge destination. The controller 4 sequentially selects one of the four areas as a target area in the order of the area A1, the area A2, the area A3, the area A4, back to the area A1, and so on. This allows preforms P to pile up in a container C roughly uniformly in the horizontal direction.

### Alternative Embodiments

The description below deals finally with recovery devices and material supplier systems. The arrangement disclosed for any embodiment below is combinable with the arrangement disclosed for any other embodiment unless such a combination causes any inconvenience.

The embodiment described above is an example in which the bucket 3 is provided with a distance-measuring sensor 35 and in which the controller 4 performs the measuring function to determine the state of the discharge destination and controls the bucket 3 for its height on the basis of the determined state for the discharging function. The controller is, however, not limited in terms of specifically how to control the bucket in causing the bucket to discharge a recovery target at a predetermined height for the discharging function for the present invention. For instance, to control the bucket for its height, an operator of the recovery device may input information into the recovery device to specify a height at which the bucket will discharge a recovery target.

The embodiment described above is an example in which the bucket 3 is provided with an optoelectronic sensor 34 as a loading sensor. However, the recovery device of the present invention may, if including a loading sensor, include a sensor other than an optoelectronic sensor such as a weight sensor or a camera. The recovery device may alternatively not include a loading sensor.

The embodiment described above is an example in which each container C has four horizontally arranged areas A1 to A4 and in which the bucket 3 discharges preforms P onto one of the four areas A1 to A4 in sequence. The recovery device of the present invention is, however, not limited in terms of which area of a recovery container the bucket discharges a recovery target onto.

The embodiment described above is an example in which the recovery device 1 serves the purpose of recovering preforms P. The recovery device of the present invention is, however, not limited in terms of its recovery target. The recovery device will be particularly effective in preventing a recovery target from falling by a distance larger than a predetermined range for such purposes as preventing damage. The predetermined height at which the bucket discharges a recovery target for the discharging function depends on such matters as the strength of the recovery target to ensure its quality.

It should be understood that with respect to other arrangements as well, the embodiments disclosed herein are illustrative in all respects and do not limit the scope of the present invention. Persons skilled in the art will readily understand that the present invention can be modified as appropriate without departing from the scope of the present invention as defined by the appended claims.

### Industrial Applicability

The present invention is applicable to a recovery device included in a material supplier system which is configured to supply preforms to a production apparatus in a factory of plastic bottle beverage products.

### Reference Signs List

- 1: Recovery device
- 2: Vertically articulated robot
- 3: Bucket
- 4: Controller
- 31: Opening
- 31a: Lower edge of opening
- 32: Side
- 32a: Inclined side
- 32b: Standing side
- 33: Bottom
- 34: Optoelectronic sensor
- 34a: Optical axis
- 35: Distance-measuring sensor
- P: Preform
- C: Container
- U: Undulation
- R: Route of bucket
- 100: Material supplier system
- 110: Conveyor
- 111: Primary segment
- 111a: First primary subsegment
- 111b: Second primary subsegment
- 112: Branch point
- 113: Secondary segment
- 114: End
- 120: Reverser machine
- Rm: Packaging material preparation room
- Rc: Container conveyor

## Claims

1. A recovery device (1) configured to receive a recovery target (P) at a predetermined receiving position and discharge the recovery target (P) into a predetermined recovery container (C),
the recovery device (1) comprising:
a robot (2);
a bucket (3) attached to the robot (2) and having an opening (31); and
a controller (4) configured to control the robot (2),
the bucket (3) being switchable in response to an operation of the robot (2) between
a receiving orientation, in which the bucket (3) is able to receive the recovery target (P) through the opening (31), and
a discharging orientation, in which the bucket (3) is able to discharge the recovery target (P) through the opening (31),
the controller (4) being configured to perform
a receiving function for controlling the robot (2) to switch the bucket (3) into the receiving orientation and move the bucket (3) to the receiving position to cause the bucket (3) to receive the recovery target (P), and
a discharging function for controlling the robot (2) to move the bucket (3) containing the recovery target (P) to a position over a bottom surface of the recovery container (C) at a predetermined height and switch the bucket (3) into the discharging orientation to cause the bucket (3) to discharge the recovery target (P) at the predetermined height,
**characterized in that** the bucket (3) is provided with a distance-measuring sensor (35) configured to measure a distance between the distance-measuring sensor (35) and a surface facing the distance-measuring sensor (35),
the controller (4) is further configured to perform a measuring function for controlling the robot (2) to allow the distance-measuring sensor (35) to move over the recovery container (C) to measure the distance, and
the controller (4) is configured to select, for the discharging function, the predetermined height at which the bucket (3) discharges the recovery target (P) based on the distance that the distance-measuring sensor (35) has measured for the measuring function.

2. The recovery device (1) according to claim 1, wherein
the bucket (3) is provided with a loading sensor (34) configured to detect that a mass of the recovery target (P) in the bucket (3) is over a predetermined threshold.

3. The recovery device (1) according to claim 1, wherein
the recovery container (C) has a plurality of horizontally arranged areas (A1, A2, A3, A4),
the discharging function involves the bucket (3) discharging the recovery target (P) onto a target area as one of the areas (A1, A2, A3, A4), and
the controller (4) is configured to select one of the areas (A1, A2, A3, A4) in a predetermined sequence as the target area for each instance of performing the discharging function.

4. The recovery device (1) according to any one of claims 1 to 3, wherein the robot (2) is a vertically articulated robot.

5. Use of the recovery device (1) according to claim 1 for recovery of the recovery target (P) which is a preform of a plastic bottle.

## Patentansprüche

1. Rückgewinnungsvorrichtung (1), die konfiguriert ist, um ein Rückgewinnungsziel (P) an einer vorbestimmten Empfangsposition zu empfangen und das Rückgewinnungsziel (P) in einen vorbestimmten Rückgewinnungsbehälter (C) abzugeben,
wobei die Rückgewinnungsvorrichtung (1) aufweist:
einen Roboter (2);
einen an dem Roboter (2) befestigten Eimer (3) mit einer Öffnung (31); und
eine Steuerung (4), die konfiguriert ist, um den Roboter (2) zu steuern,
wobei der Eimer (3) ansprechend auf einen Betrieb des Roboters (2) umschaltbar ist zwischen
einer Empfangsorientierung, in welcher der Eimer (3) fähig ist, das Rückgewinnungsziel (P) durch die Öffnung (31) zu empfangen, und
einer Abgabeorientierung, in welcher der Eimer (3) fähig ist, das Rückgewinnungsziel (P) durch die Öffnung (31) abzugeben,
wobei die Steuerung (4) konfiguriert ist, um durchzuführen:
eine Empfangsfunktion zum Steuern des Roboters (2), um den Eimer (3) in die Empfangsorientierung zu schalten und den Eimer (3) zu der Empfangsposition zu bewegen, um zu bewirken, dass der Eimer (3) das Rückgewinnungsziel (P) empfängt, und
eine Abgabefunktion zum Steuern des Roboters (2), um den Eimer (3), der das Rückgewinnungsziel (P) enthält, in einer vorbestimmten Höhe zu einer Position über einer unteren Oberfläche des Rückgewinnungsbehälters (C) zu bewegen und den Eimer (3) in die Abgabeorientierung zu schalten, um zu bewirken, dass der Eimer (3) das Rückgewinnungsziel (P) in der vorbestimmten Höhe abgibt,
**dadurch gekennzeichnet, dass** der Eimer (3) mit einem Abstandsmesssensor (35) versehen ist, der konfiguriert ist, um einen Abstand zwischen dem Abstandsmesssensor (35) und einer dem Abstandsmesssensor (35) zugewandten Oberfläche zu messen,
wobei die Steuerung (4) ferner konfiguriert ist, um eine Messfunktion zum Steuern des Roboters (2) durchzuführen, um zu ermöglichen, dass der Abstandsmesssensor (35) sich über den Rückgewinnungsbehälter (C) bewegt, um den Abstand zu messen, und
wobei die Steuerung (4) konfiguriert ist, um für die Abgabefunktion die vorgegebene Höhe, auf welcher der Eimer (3) das Rückgewinnungsziel (P) abgibt, basierend auf dem Abstand, den der Abstandsmesssensor (35) für die Messfunktion gemessen hat, auszuwählen.

2. Rückgewinnungsvorrichtung (1) nach Anspruch 1, wobei
der Eimer (3) mit einem Beladungssensor (34) versehen ist, der konfiguriert ist, um zu erfassen, dass eine Masse des Rückgewinnungsziels (P) in dem Eimer (3) über einem vorbestimmten Schwellwert liegt.

3. Rückgewinnungsvorrichtung (1) nach Anspruch 1, wobei
der Rückgewinnungsbehälter (C) mehrere horizontal angeordnete Bereiche (A1, A2, A3, A4) hat,
die Abgabefunktion bedingt, dass der Eimer (3) das Rückgewinnungsziel (P) auf eine Zielfläche als eine der Flächen (A1, A2, A3, A4) abgibt, und
die Steuerung (4) konfiguriert ist, um für jeden Vorgang der Durchführung der Abgabefunktion eine der Flächen (A1, A2, A3, A4) in einer vorbestimmten Abfolge als die Zielfläche auszuwählen.

4. Rückgewinnungsvorrichtung (1) nach einem der Ansprüche 1 bis 3, wobei der Roboter (2) ein vertikal gelenkiger Roboter ist.

5. Verwendung der Rückgewinnungsvorrichtung (1) nach Anspruch 1 für die Rückgewinnung des Rückgewinnungsziels (P), das eine Vorform einer Kunststoffflasche ist.

## Revendications

1. Dispositif de récupération (1) configuré pour recevoir une cible de récupération (P) à une position de réception prédéterminée et décharger la cible de récupération (P) dans un conteneur de récupération prédéterminé (C),
le dispositif de récupération (1) comprenant:
un robot (2);
un godet (3) fixé au robot (2) et ayant une ouverture (31); et
un organe de commande (4) configuré pour commander le robot (2),
le godet (3) pouvant être amené à passer en réponse à une opération du robot (2) entre
une orientation de réception, dans laquelle le godet (3) est capable de recevoir la cible de récupération (P) par l'ouverture (31), et
une orientation de déchargement, dans laquelle le godet (3) est capable de décharger la cible de récupération (P) par l'ouverture (31),
l'organe de commande (4) étant configuré pour exécuter
une fonction de réception pour commander le robot (2) pour faire passer le godet (3) dans l'orientation de réception et déplacer le godet (3) jusqu'à la position de réception pour amener le godet (3) à recevoir la cible de récupération (P), et
une fonction de déchargement pour commander le robot (2) pour déplacer le godet (3) contenant la cible de récupération (P) jusqu'à une position au-dessus d'une surface inférieure du conteneur de récupération (C) à une hauteur prédéterminée et faire passer le godet (3) dans l'orientation de déchargement pour amener le godet (3) à décharger la cible de récupération (P) à la hauteur prédéterminée,
**caractérisé en ce que** le godet (3) est équipé d'un capteur de mesure de distance (35) configuré pour mesurer une distance entre le capteur de mesure de distance (35) et une surface faisant face au capteur de mesure de distance (35),
l'organe de commande (4) est configuré en outre pour exécuter une fonction de mesure pour commander le robot (2) pour permettre au capteur de mesure de distance (35) de se déplacer au-dessus du conteneur de récupération (C) pour mesurer la distance, et
l'organe de commande (4) est configuré pour sélectionner, pour la fonction de déchargement, la hauteur prédéterminée à laquelle le godet (3) décharge la cible de récupération (P) en fonction de la distance que le capteur de mesure de distance (35) a mesurée pour la fonction de mesure.

2. Dispositif de récupération (1) selon la revendication 1, dans lequel
le godet (3) est équipé d'un capteur de charge (34) configuré pour détecter qu'une masse de la cible de récupération (P) dans le godet (3) est au-dessus d'un seuil prédéterminé.

3. Dispositif de récupération (1) selon la revendication 1, dans lequel
le conteneur de récupération (C) a une pluralité de zones (A1, A2, A3, A4) disposées horizontalement,
la fonction de déchargement implique que le godet (3) décharge la cible de récupération (P) sur une zone cible en tant que l'une des zones (A1, A2, A3, A4), et
l'organe de commande (4) est configuré pour sélectionner l'une des zones (A1, A2, A3, A4) en tant que zone cible dans un ordre prédéterminé pour chaque cas d'exécution de la fonction de déchargement.

4. Dispositif de récupération (1) selon l'une quelconque des revendications 1 à 3, dans lequel le robot (2) est un robot articulé verticalement.

5. Utilisation du dispositif de récupération (1) selon la revendication 1 pour la récupération de la cible de récupération (P) qui est une préforme de bouteille en plastique.
